Europäisches Patentamt

European Patent Office

Office européen des brevets

(19)

(11) Veröffentlichungsnummer: **0 386 646**
**A1**

## (12) EUROPÄISCHE PATENTANMELDUNG

(21) Anmeldenummer: 90104061.8

(22) Anmeldetag: 02.03.90

(51) Int. Cl.⁵: **C09D 7/12, C09D 201/00, C08K 3/00**

(30) Priorität: 09.03.89 DE 3907604

(43) Veröffentlichungstag der Anmeldung:
**12.09.90 Patentblatt 90/37**

(84) Benannte Vertragsstaaten:
**AT BE CH DE ES FR GB GR IT LI NL SE**

(71) Anmelder: **TEROSON GMBH**
**Postfach 10 56 20, Hans-Bunte-Strasse 4**
**D-6900 Heidelberg 1(DE)**

(72) Erfinder: **Grünert, Klaus**
**Gartenstrasse 14**
**D-6945 Hirschberg(DE)**
Erfinder: **Jösel, Rainer**
**Kaiserstrasse 43**
**D-7500 Karlsruhe(DE)**

(74) Vertreter: **UEXKÜLL & STOLBERG**
**Patentanwälte**
**Beselerstrasse 4**
**D-2000 Hamburg 52(DE)**

(54) Spritzbare Beschichtungsmasse zur Schalldämpfung.

(57) Es wird eine spritzbare Beschichtungsmasse zur Schalldämpfung beschrieben, die nicht mehr als 30 Gew.% wäßrige Kunstharzdispersion, eine Mischung aus flammhemmenden Füllstoff des Hydrargillit-Typs und akustisch wirksamen Füllstoff, Fasern, von denen mindestens ein Teil wasserdispergierbare anorganische Fasern sind, Wasser und gegebenenfalls übliche Zusätze enthält, wobei die Füllstoffmischung eine optimierte Packungsdichte aufweist. Die erhaltenen Beschichtungsmassen sind bindemittelarm, schwer entflammbar, umweltfreundlich und weisen verbesserte akustische Eigenschaften sowie eine verminderte Tendenz zur Rißbildung beim Trockungsvorgang auf.

EP 0 386 646 A1

## Spritzbare Beschichtungsmasse zur Schalldämpfung

Die Erfindung betrifft eine spritzbare Beschichtungsmasse zur Schalldämpfung auf der Basis von wäßriger Kunstharzdispersion, Füllstoffen und Fasern.

Bei der Herstellung von Fahrzeugen, Maschinen und Geräten werden heutzutage fast ausschließlich sehr dünnwandige Bleche eingesetzt. Durch sich mechanisch bewegende Teile oder laufende Motoren werden diese dünnwandigen Bleche unvermeidbar in Schwingungen versetzt und strahlen demzufolge Schall ab. Um diese Schallabstrahlung zu reduzieren, werden daher insbesondere im Automobilbau und bei der Herstellung von Haushaltsgeräten diese Bleche mit schalldämpfenden Beschichtungen, sogenannten Antidröhnbelägen, versehen.

Schalldämpfende Beschichtungen auf der Basis von wäßrigen oder lösungsmittelhaltigen Kunstharz- oder Bitumendispersionen sind bekannt. Diesen Beschichtungen werden zur Verringerung der Brennbarkeit sowie zur Verbesserung des Stand- vermögens an senkrechten Wänden und/oder der schalldämpfenden Eigenschaften Füllstoffe und/oder Fasern zugesetzt. Bei den bisher verwendeten Beschichtungsmassen handelt es sich entweder um relativ bindemittelreiche Systeme, die zwar beim Trocknungsvorgang lediglich eine geringe Neigung zur Rißbildung aufweisen, dafür aber leicht entflammbar sind oder um relativ bindemittelarme Systeme, die zwar ein besseres Brandverhalten zeigen, dafür aber in hohem Maße zur Rißbildung tendieren.

Gerade im Hinblick auf das wachsende Umweltbewußtsein und gestiegene Brandschutzerfordernisse, die insbesondere bei technischen Neuentwicklungen, z.B. bei Hochgeschwindigkeitszügen, eine steigende Bedeutung gewinnen, gilt es Beschichtungsmassen zur Schalldämpfung zur Verfügung zu stellen, die trotz geringem Bindemittelgehalt schwer entflammbar sind. Darüber hinaus sollten derartige Beschichtungsmassen in einfacher Weise, z.B. mittels des Spritzverfahrens, aufgetragen werden können, gesteigerte Schalldämpfungseigenschaften aufweisen und im wesentlichen frei von Lösungsmitteln, Halogenen, Schwermetallen und Asbest sein.

Der Erfindung liegt die Aufgabe zugrunde solche Beschichtungsmassen zur Verfügung zu stellen.

Diese Aufgabe wird überraschenderweise durch die spritzbare Beschichtungsmasse gemäß Hauptanspruch gelöst, wobei die Unteransprüche bevorzugte Ausführungsformen der Erfindung betreffen.

Die erfindungsgemäße spritzbare Beschichtungsmasse zur 30 Schalldämpfung enthält nicht mehr als 30 Gew.%, vorzugsweise 10 bis 15 Gew.%, einer wäßrigen Kunstharzdispersion oder einer Mischung verschiedener Kunstharz dispersionen und ist damit bindemittelarm. Geeignete Kunstharze sind generell Homopolymerisate, Copolymerisate und/oder Kohlenwasserstoffharze mit Glasübergangstemperaturen unterhalb der Raumtemperatur, die in der Lage sind , klebrige Filme und wäßrige, lösungsmittelfreie und auch bei hohen Füllstoffgehalten stabile Dispersionen zu bilden.

Vorzugsweise finden wäßrige Kunstharzdispersionen auf Basis 5 von z.B. Polyvinylacetat, Ethylen-Vinylacetat-, Styrol-Butadien-, Styrol-Butadien-Styrol-, Styrol-Isopren-Styrol-Polymer, Polyurethan und/oder Acrylsäureester-Copolymer und besonders bevorzugt auf Basis von Acrylsäureester-Copolymer Verwendung.

Der Festkörperanteil der Beschichtungsmasse beträgt nicht weniger als 50 Gew.% und vorzugsweise 60 bis 70 Gew.%.

Der Gesamtgehalt der erfindungsgemäßen Beschichtungsmasse an 15 organischen Bestandteilen beträgt nicht mehr als 25 Gew.% und vorzugsweise 10 bis 15 Gew.%, bezogen auf den Festkörperanteil.

Weiterhin enthält die Beschichtungsmasse als flammhemmenden Füllstoff im wesentlichen schwermetall- und halogenfreie anorganische Verbindungen oder Mineralien, die bei erhöhter Temperatur dehydratisieren, in einer Menge von nicht weniger als 10 Gew.% und vorzugsweise 25 bis 35 Gew.%, bezogen auf den Festkörperanteil.Beispiele für diese sind Magnesiumhydroxid, Magnesiumsulfatheptahydrat, Alaune und/oder Hydrargillit, wobei Hydrargillit bevorzugt ist. Die auf diese Weise flammhemmend ausgerüstete Beschichtungsmasse ist frei von Halogenen und Schwermetallen, was wesentlich zu ihrer ausgezeichneten Umweltverträglichkeit beiträgt.

Der Gehalt an akustisch wirksamen Füllstoffen beträgt nicht weniger als 20 Gew.% und vorzugsweise bis 60 Gew.%, bezogen auf den Festkörperanteil. Beispiel für verwendbare akustisch wirksame Füllstoffe sind Glimmer, Schiefermehl, Montmorillonit-; Glas- oder Metallschuppen, Graphit, Talkum und/oder Tonminerale, wobei Glimmer bevorzugt ist.

Ein wesentliches charakteristikum der erfindungsgemäßen Beschichtungsmasse ist es, daß die Mischung aus flammhemmende und akustisch wirksamen Füllstoffen derart aufgebaut ist, daß sich beim Auftragen von Siebdurchgang D der Füllstoffmischung in Gewichtsprozent auf der Ordinate gegen den Korndurchmesser d der Teilchen der Füllstoffmischung in Millimeter auf der Abszisse eine Körnungskennli-

2

nie ergibt, die im wesentlichen der Gleichung

$$D = \sqrt{\frac{d}{d_{max}}}$$

gehorcht, in der D den Siebdurchgang in Gew.%, d den Korndurchmesser in Millimeter und $d_{max\ den}$ maximalen Korndurchmesser in Millimeter bedeuten. Die der vorstehenden Gleichung entsprechende Kurve wird als Fuller-Kurve bezeichnet und gibt die zur Erzielung der dichtesten Packung eines Gekörns erforderliche KorngröRenverteilung an. Aufgrund dieser optimierten Korngrößenverteilung sind die Hohlräume im Füllstoffgemisch auf ein Minimum reduziert.

Überraschenderweise besitzt eine Beschichtungsmasse mit einer derartig aufgebauten Füllstoffmischung trotz Außerachtlassung der unterschiedlichen Kornformen der verwendeten Füllstoffe eine optimale Packungsdichte, wenn die Beschichtungsmasse zusätzlich nicht mehr als 10 Gew.% Fasern enthält, von denen mindestens ein Teil wasserdispergierbare anorganische Fasern sind. Die Beschichtungsmasse enthält vorzugsweise O,5 bis 2 Gew.% Fasern, bezogen auf den Festkörperanteil. Beispiele für verwendbare Fasern sind organische Fasern, wie Cellulosefasern, und Beispiele für anorganische wasserdispergierbare Fasern sind wasserdispergierbare Mineral- oder Glasfasern.

Der maximale Korndurchmesser der verwendeten Füllstoffe liegt im Bereich von 200 bis 1000 μm und vorzugsweise im Bereich von 300 bis 400 μm.

Als weiteren Bestandteil enthält die spritzbare Beschichtungsmasse Wasser in einer zum Ausgleich der Gewichtsbilanz ausreichenden Menge.

Darüber hinaus kann die erfindungsgemäße Beschichtungsma sse gegebenenfalls Zusätze enthalten, die z.B. zur Froststabilisierung, Benetzungsverbesserung der Füllstoffe und Fasern, zur fungiziden und mikrobakteriellen Konservierung, zur Verdickung und/oder Korrosionsinhibierung dienen.

Obwohl die erfindungsgemäße Beschichtungsmasse nur einen geringen Bindemittelanteil aufweist, tritt bei ihrer Trocknung dennoch keine Rißbildung auf. Neben der verminderten Tendenz zur Rißbildung weist die erfindungsgemäße Beschichtungsmasse gesteigerte Schalldämpfungseigenschaften sowie ein verbessertes Brandverhalten auf. Die Beschichtungsmasse kann in einfacher Weise mittels der üblichen Techniken, vorzugsweise im Spritzverfahren, auf schallabstrahlende Flächen aufgebracht werden. Dabei erweist sich das gesteigerte Standvermögen an senkrechten Flächen als weiterer Vorzug. Anschließend wird die aufgebrachte Beschichtungsmasse mittels konventioneller Verfahren getrocknet und damit gehärtet.

Bei der Herstellung der erfindungsgemäßen Beschichtungsmasse zur Schalldämpfung werden die wesentlichen Komponenten sowie gegebenenfalls eingesetzte Zusätze in geeigneten konventionellen Knet- oder Rührmaschinen mit möglichst hoher Mischerleistung und Scherwirkung zu einer homoge nen Masse verarbeitet.

Es ist bevorzugt, daß zuerst die ausgewählten Füllstoffe zusammen mit den gut aufgeschlossenen Fasern, dem Wasser und einer kleinen Teilmenge oder ohne die als Bindemittel fungierende Kunstharzdispersione möglichst schonend gemischt werden. Nach weitestgehender Homogenisierung dieser Vermischung erfolgt dann die Zugabe der restlichen Kunstharzdispersion.

## Beispiel

Zur Herstellung einer erfindungsgemäßen Beschichtungsmasse wurden die untenstehenden Komponenten in einem Mischer gemischt. Dabei wurden etwa 40% der Gesamtwassermenge sowie die Zusätze und die Fasern vorgelegt und kurz durchgemischt. Anschließend wurden eine Mischung der angegebenen Füllstoffe, die eine der Fuller-Kurve gehorchenden Korngrößenverteilung aufwies, sowie die restliche Wassermenge in beliebiger Reihenfolge in den Mischer gegeben. Nach weitestgehender Homogenisierung dieser Vormischung wurde die wäßrige Kunstharzdispersion bei laufendem Mischer zugegeben. Zur Vermeidung einer möglichen Schädigung der Kunstharzdispersion wurde der Mischbehälter während des Mischvorganges gekühlt.

Tabelle

| Komponenten | Gew.% |
|---|---|
| Kunstharzdispersion aus 8,25 Gew.% Kunstharz und 6,75 Gew.% Wasser | 15,0 |
| Hydrargillit (Al(OH)$_3$) | 20,0 |
| akustisch wirksame Füllstoffe | 35,0 |
| organische Fasern | 0,5 |
| anorganische wasserdispergierbare Fasern | 0,5 |
| Wasser | 26,0 |
| Isopropanol (Frostschutzmittel) | 2,0 |
| Zusätze (Biozide, Tenside) | 1,0 |

Die auf diese Weise erhaltene spritzbare Beschichtungsmasse besaß die folgenden Eigenschaften:

Konuspenetration (DIN ISO2137): 330 x ± 30 x $10^{-1}$ mm

Festkörperanteil (DIN 53215): 65 ± 1%

pH-Wert: 9 bis 10

spezifisches Gewicht, naß: 1,4 ± 0,1 g/cm$^3$,

spezifisches Gewicht, trocken: 1,2 ± 0,1 g/cm$^3$

Verlustfaktor nach DIN 53 440 bei 20°C, 200 Hertz auf 1 mm Stahlblech

bei 1,5-facher Blechdicke: mindestens 0,13

bei 2-facher Blechdicke: mindestens 0,20

Nicht brennbar nach DS 899/35

Brennbarkeitsgrad-Qualmentwicklungsgrad-Tropfbarkeitsgrad (Prüfkriterien der deutschen Bundesbahn): 4 - 4 - 4

Schwerentflammbar entsprechend

DIN 4102/Teil 1, Klasse B 1

Beim Trocknungsvorgang einer derartigen Beschichtungsmasse trat keinerlei Rißbildung auf.


**Ansprüche**

1. Spritzbare Beschichtungsmasse zur Schalldämpfung auf der Basis von wäßriger Kunstharzdispersion, Füllstoffen und Fasern, **dadurch gekennzeichnet**, daß sie

a) nicht mehr als 30 Gew.% einer wäßrigen Kunstharzdispersion oder einer Mischung verschiedener Kunstharzdispersionen,

b) eine Füllstoffmischung mit einem maximalen Korndurchmesser im Bereich von 200 bis 1000 μm aus

i) nicht weniger als 10 Gew.%, bezogen auf den Festkörperanteil, im wesentlichen schwermetall- und halogenfreien anorganischen Verbindungen oder Mineralien, die bei erhöhter Temperatur dehydratisieren, als flammhemmenden Füllstoff und

ii) nicht weniger als 20 Gew.% akustisch wirksamen Füllstoffen, bezogen auf den Festkörperanteil,

c) nicht mehr als 10 Gew.% Fasern, bezogen auf den Festkörperanteil, von denen mindestens ein Teil wasserdispergierbare anorganische Fasern sind,

d) Wasser und

e) gegebenenfalls übliche Zusätze

enthält, wobei nicht mehr als 25 Gew.% organische Bestandteile, bezogen auf den Festkörperanteil, vorhanden sind, der Festkörperanteil nicht weniger als 50 Gew.% beträgt und die Füllstoffmischung derart aufgebaut ist, daß sich beim Auftragen von des Siebdurchganges D der Füllstoffmischung in Gew.% auf der Ordinate gegen den Korndurchmesser d der Teilchen der Füllstoffmischung in Millimeter auf der Abszisse eine Körnungskennlinie ergibt, die im wesentlichen der Gleichung

$$D = \sqrt{\cfrac{d}{d_{max}}}$$

gehorcht, in der D den Siebdurchgang in Gew.%, d den Korndurchmesser in Millimeter und $d_{max}$ den maximalen Korndurchmesser in Millimeter bedeuten.

2. Beschichtungsmasse nach Anspruch 1, dadurch gekennzeichnet, daß sie 10 bis 15 Gew.% wäßrige Kunstharzdispersion enthält.

3. Beschichtungsmasse nach Anspruch 1 oder 2, da durch gekennzeichnet, daß der Festkörperanteil 60 bis 70 Gew.% beträgt.

4. Beschichtungsmasse nach einem der Ansprüche 1 bis 3, dadurch gekennzeichnet, daß sie 10 bis 15 Gew.% organische Bestandteile, bezogen auf den Festkörperanteil, enthält.

5. Beschichtungsmasse nach einem der Ansprüche 1 bis 4, dadurch gekennzeichnet, daß sie 25 bis 35 Gew.% flammhemmenden Füllstoff, bezogen auf den Festkörperanteil, enthält.

6. Beschichtungsmasse nach einem der Ansprüche 1 bis 5, dadurch gekennzeichnet, daß sie 40 bis 60 Gew.% akustisch wirksame Füllstoffe, bezogen auf den Festkörperanteil, enthält.

7. Beschichtungsmasse nach einem der Ansprüche 1 bis 6, dadurch gekennzeichnet, daß sie 0,5 bis 2 Gew.% Fasern, bezogen auf den Festkörperanteil, enthält.

8. Beschichtungsmasse nach einem der Ansprüche 1 bis 7, dadurch gekennzeichnet, daß die Füllstoffmischung einen maximalen Korndurchmesser im Bereich von 300 bis 400 $\mu$m hat.

9. Beschichtungsmasse nach einem der Ansprüche 1 bis 8, dadurch gekennzeichnet, daß sie als akustisch wirksame Füllstoffe Glimmer, Schiefermehl, Montmorillonit-, Glas- oder Metallschuppen, Graphit, Talkum und/oder Tonminerale enthält.

10. Beschichtungsmasse nach einem der Ansprüche 1 bis 8, dadurch gekennzeichnet, daß sie als flammhemmenden Füllstoff Hydrargillit, Magnesiumhydroxid, Magnesiumsulfatheptahydrat und/oder Alaune enthält.

11. Verwendung der Beschichtungsmasse nach einem der Ansprüche 1 bis 10 zur Schalldämpfung von schallabstrahlenden Flächen durch Aufbringen der Beschichtungsmasse auf die Flächen und anschließendes Trocknen der Beschichtung.

## EINSCHLÄGIGE DOKUMENTE

EP 90104061.8

| Kategorie | Kennzeichnung des Dokuments mit Angabe, soweit erforderlich, der maßgeblichen Teile | Betrifft Anspruch | KLASSIFIKATION DER ANMELDUNG (Int Cl⁴) |
|---|---|---|---|
| Y | DE - A1 - 2 423 618 <br> (HOECHST AG) <br> * Ansprüche; Beispiele * <br> -- | 1 | C 09 D 7/12 <br> C 09 D 201/00 <br> C 08 K 3/00 |
| Y | DE - A1 - 3 030 893 <br> (KURARAY CO.) <br> * Ansprüche; Beispiele * <br> -- | 1 | |
| Y | DE - A1 - 3 120 831 <br> (SKS-TECHNIK SÄURE UND KORRO-SIONSSCHUTZ GMBH) <br> * Ansprüche * <br> -- | 1 | |
| Y | DE - A1 - 2 630 779 <br> (THE BRITISH PETROLEUM CO.) <br> * Ansprüche * <br> -- | 1 | |
| Y | DE - A1 - 2 502 464 <br> (HOOGOVENS IJMUIDEN B.V.) <br> * Ansprüche * <br> ---- | 1 | |

RECHERCHIERTE SACHGEBIETE (Int Cl⁴)

C 09 D
C 08 K

Der vorliegende Recherchenbericht wurde für alle Patentansprüche erstellt

| Recherchenort <br> WIEN | Abschlußdatum der Recherche <br> 31-05-1990 | Prüfer <br> PAMMINGER |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82